(19) Europäisches Patentamt
European Patent Office
Office européen des brevets

(11) **EP 3 251 866 B1**

(12) **EUROPEAN PATENT SPECIFICATION**

(45) Date of publication and mention
of the grant of the patent:
**02.01.2019 Bulletin 2019/01**

(51) Int Cl.:
***B41J 29/393*** *(2006.01)*      ***B41J 2/01*** *(2006.01)*
***B41J 2/165*** *(2006.01)*      ***B41J 23/00*** *(2006.01)*
***B41J 29/02*** *(2006.01)*

(21) Application number: **17000732.2**

(22) Date of filing: **27.04.2017**

(54) **PRINTING APPARATUS AND CONTROL METHOD THEREFOR**

DRUCKVORRICHTUNG UND STEUERUNGSVERFAHREN DAFÜR

APPAREIL D'IMPRESSION ET SON PROCÉDÉ DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.05.2016 JP 2016099817**

(43) Date of publication of application:
**06.12.2017 Bulletin 2017/49**

(73) Proprietor: **CANON KABUSHIKI KAISHA
Tokyo (JP)**

(72) Inventor: **Iida, Kazuki
Tokyo (JP)**

(74) Representative: **WESER & Kollegen
Radeckestraße 43
81245 München (DE)**

(56) References cited:
JP-A- 2007 248 729      JP-A- 2010 259 279
US-A1- 2005 135 830      US-A1- 2015 273 822

**Description**

BACKGROUND OF THE INVENTION

Field of the Invention

The present invention relates to a printing apparatus and a control method therefor, and more particularly to, for example, a printing apparatus for performing printing using power charged in an electric storage such as a multilayer capacitor and a control method for the printing apparatus.

Description of the Related Art

In a printing apparatus which frequently switches over between driving and stop of a motor, a consumption current generally varies largely, and the acceptable current value of a power supply unit for driving the motor is determined based on the maximum current value in the variation.
To suppress the variation in consumption current, Japanese Patent Laid-Open No. 2010-259279 proposes the use of an electrical double layer capacitor. That is, when the consumption current of the motor or the like of a printing apparatus is small, the electrical double layer capacitor is charged, and when the consumption current becomes large, charges charged in the electrical double layer capacitor are discharged and used, thereby suppressing the variation in consumption current of the printing apparatus.
With this arrangement, if the consumption power of the printing apparatus at the time of a normal operation exceeds power supplied to the printing apparatus, the printing apparatus is intermittently stopped and set in a standby state. This ensures a time during which the voltage of the electrical double layer capacitor rises in the standby state, and when the operation restarts after that, it is possible to compensate for a shortage of power of an external power supply by externally input power and power stored in the electrical double layer capacitor. As described above, according to Japanese Patent Laid-Open No. 2010-259279, it is possible to execute a print operation even with small input power by intermittently inserting a standby time.
In a printing apparatus such as a printer, if the operation is stopped at an inappropriate timing, the quality of an image or the like may degrade. For example, in a printing apparatus having an arrangement of discharging ink onto a paper surface while scanning a carriage incorporating a printhead, if the operation of the printing apparatus is stopped while driving a carriage motor for moving the carriage, the carriage during a print operation in one scan stops on the paper surface. To restart the print operation from this state, it is necessary to accelerate the carriage motor and discharge ink from the printhead at the same time.
With this operation, print unevenness may occur between regions printed before and after the stop of the carriage in an image of a print result. Thus, from the viewpoint of achieving high-quality printing, driving of the carriage motor should not be stopped while moving the carriage for a print operation. As described in Japanese Patent Laid-Open No. 2010-259279, if movement of the carriage corresponding to one scan starts in a state in which the charge amount of the electrical double layer capacitor is insufficient, a shortage of power may occur during the one scan, and the carriage may stop the print operation during printing of the one scan.
JP 2007-248729 discloses a printing apparatus with a print unit and a sheet feeding device that comprises an electric storage part, wherein a control part charges the electric storage part using the power supplied from a power converter during standby time when it stands by for executing a job.

SUMMARY OF THE INVENTION

Accordingly, the present invention is conceived as a response to the above-described disadvantages of the conventional art.
For example, a printing apparatus and a control method therefor according to this invention are capable of executing a sequence in an appropriate status with respect to an electric storage amount.
The present invention in its first aspect provides a printing apparatus as specified in claims 1 to 12.
The present invention in its second aspect
provides a control method for a printing apparatus as specified in claims 13 to 15.
The invention is particularly advantageous since it is possible to execute the next sequence in an appropriate status with respect to an electric storage amount.
Further features of the present invention will become apparent from the following description of exemplary embodiments (with reference to the attached drawings).

BRIEF DESCRIPTION OF THE DRAWINGS

Fig. 1 is a perspective view schematically showing the outer appearance of an inkjet printing apparatus according to an exemplary embodiment of the present invention.

Fig. 2 is a block diagram schematically showing a power supply and drive arrangement according to the first embodiment.

Figs. 3A, 3B, and 3C are timing charts for explaining control for lowering average consumption power to power suppliable by an external power supply according to the first embodiment.

Fig. 4 is a flowchart illustrating standby time insertion processing by a system control unit according to the first embodiment.

Fig. 5 is a block diagram schematically showing a power supply and drive arrangement according to the second embodiment.

Figs. 6A, 6B, and 6C are timing charts for explaining control for lowering average consumption power to power suppliable by an external power supply according to the second embodiment.

Fig. 7 is a flowchart illustrating standby time insertion processing by a system control unit according to the second embodiment.

DESCRIPTION OF THE EMBODIMENTS

Exemplary embodiments of the present invention will now be described in detail in accordance with the accompanying drawings.

In this specification, the terms "print" and "printing" not only include the formation of significant information such as characters and graphics, but also broadly includes the formation of images, figures, patterns, and the like on a print medium, or the processing of the medium, regardless of whether they are significant or insignificant and whether they are so visualized as to be visually perceivable by humans.

Also, the term "print medium" not only includes a paper sheet used in common printing apparatuses, but also broadly includes materials, such as cloth, a plastic film, a metal plate, glass, ceramics, wood, and leather, capable of accepting ink.

Furthermore, the term "ink" (to be also referred to as a "liquid" hereinafter) should be extensively interpreted similar to the definition of "print" described above. That is, "ink" includes a liquid which, when applied onto a print medium, can form images, figures, patterns, and the like, can process the print medium, and can process ink. The process of ink includes, for example, solidifying or insolubilizing a coloring agent contained in ink applied to the print medium.

Further, a "print element" (to be also referred to as a "nozzle" hereinafter) generically means an ink orifice or a liquid channel communicating with it, and an element for generating energy used to discharge ink, unless otherwise specified.

Furthermore, "ASIC" general means an Application-Specific Integrated Circuit. However, ASIC in this application is not limited to the meaning of application-specific. ASIC in this specification indicates an integrated circuit in which circuits which implement a plurality functions are integrated.

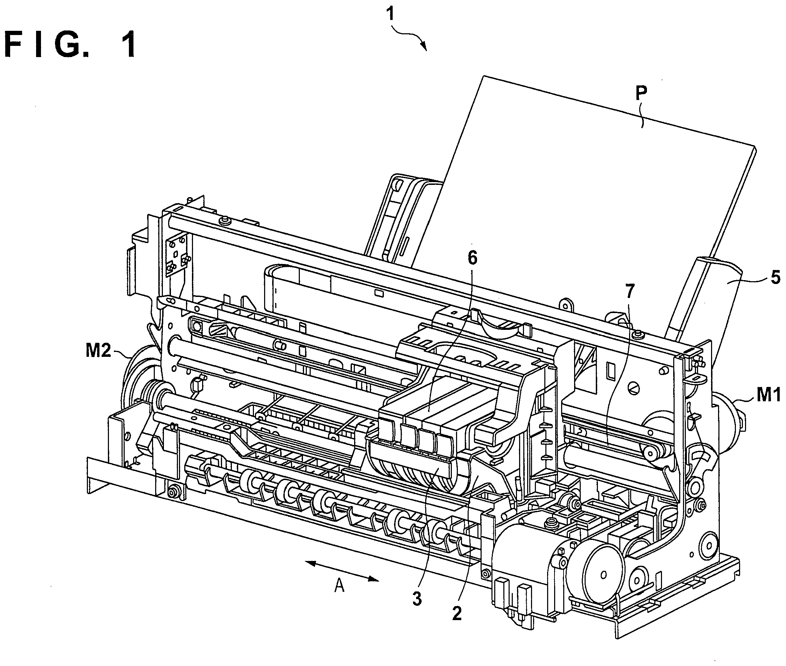

<General Outline of Printing Apparatus (Figs. 1 to 3C)>

Fig. 1 is a perspective view showing the schematic arrangement of an inkjet printing apparatus (to be referred to as a printing apparatus hereinafter) according to an exemplary embodiment of the present invention.

As shown in Fig. 1, the printing apparatus mounts a carriage 2 to which an inkjet printhead (to be referred to as a printhead hereinafter) 3 for performing printing by discharging ink in accordance with the inkjet method is attached, and performs printing by reciprocating the carriage 2 in directions indicated by an arrow A. A transfer mechanism 7 transfers, to the carriage 2, a driving force generated by a carriage motor M1, and the carriage 2 moves in the directions indicated by the arrow A. On the other hand, a print medium P such as a print sheet is fed via a paper feed mechanism 5, and conveyed to a print position by the driving force of a conveyance motor M2. Ink is discharged from the printhead 3 to the print medium P at the print position, thereby performing printing.

In addition to the printhead 3, ink cartridges 6 each storing ink to be supplied to the printhead 3 are attached to the carriage 2 of a printing apparatus 1. Each ink cartridge 6 can be detachable from the carriage 2.

The printing apparatus 1 shown in Fig. 1 can perform color printing. To do this, four ink cartridges storing inks of magenta (M), cyan (C), yellow (Y), and black (K) are mounted on the carriage 2. The four ink cartridges are individually detachable.

The printhead 3 according to this embodiment adopts the inkjet method of discharging ink using heat energy.

Thus, electrothermal transducers are included. The electrothermal transducers are provided in correspondence with respective orifices. A pulse voltage is applied to a corresponding electrothermal transducer in accordance with a print signal, thereby discharging ink from a corresponding orifice.

Embodiments of a power supply and drive arrangement used in the printing apparatus having the above arrangement will be described next.

[First Embodiment]

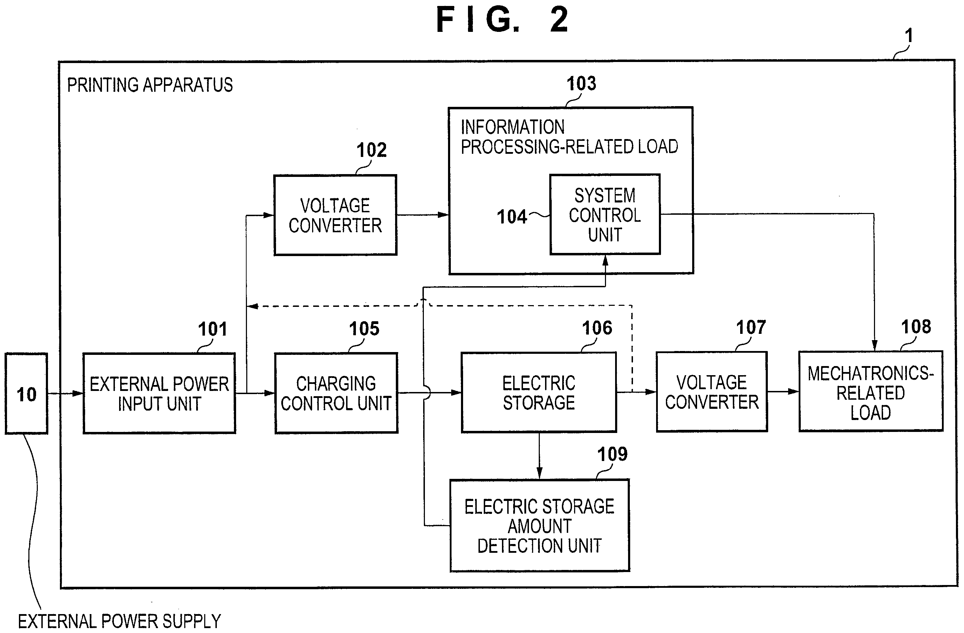

Fig. 2 is a block diagram schematically showing a power supply and drive arrangement according to the first embodiment of the present invention.

An external power supply 10 shown in Fig. 2 is, for example, a PC having a USB terminal. In this example, a PC supporting USB 2.0 or USB 3.0 may be used. Alternatively, a PC, a charger, or the like supporting the USB charging standard such as Battery Charging Specification or supply of large power such as USB Power Delivery may be used. An AC adapter or the like without any USB interface may be adopted.

An external power input unit 101 is a connector for connection to the external power supply 10. Power obtained from the external power input unit 101 is supplied to a voltage converter 102 and a charging control unit 105, converted, by the voltage converter 102, into a voltage for driving a system load, and then consumed by an information processing-related load 103. The information processing-related load 103 serves as a system control unit 104 including a memory and a CPU for performing the system control of the printing apparatus.

The charging control unit 105 charges an electric storage 106 by power input from the external power input unit 101. The maximum charging current at this time is controlled so the sum of a current charged by the charging control unit 105 and a current consumed by the voltage converter 102 does not exceed the assumed acceptable current of the external power supply 10. It is required that the electric storage 106 can be charged/discharged immediately, and hardly deteriorates due to repetitive charging/discharging. For example, an electrical double layer capacitor is desirably used. The charging control unit 105 determines a charging current value in consideration of not only the fact that the suppliable current of the external power supply 10 is not exceeded but also the charging capability of the charging control unit 105 and the maximum charging current of the electric storage 106.

A voltage converter 107 converts the voltage of the electric storage 106 into a voltage necessary for a mechatronics-related load 108. If an electrical double layer capacitor is used as the electric storage 106, the stored charge amount is proportional to a terminal voltage, and thus the terminal voltage largely lowers due to discharge. The voltage converter 107 desirably supports a wide input voltage range so as to be tolerable of a decrease in voltage caused by discharge of the electric storage 106. The mechatronics-related load 108 is assumed to include a load whose driving can be stopped only at a limited timing, such as the print elements of the printhead 3 and the carriage motor M1 of the printing apparatus.

An electric storage amount detection unit 109 detects the electric storage amount of the electric storage 106. A detection method should be appropriately selected depending on the type of the electric storage 106, and may be implemented by, for example, estimating a charged charge amount by measuring the terminal voltage of the electric storage 106 or by forming a Coulomb counter by monitoring the input/output current of the electric storage 106.

The electric storage amount detection unit 109 is connected to the system control unit 104, and uses the detected electric storage amount as information for controlling charging/discharging. The operation/stop of mechatronics-related load 108 is controlled in accordance with determination of the system control unit 104.

In the printing apparatus having the above arrangement, if the external power supply 10 is connected to the external power input unit 101, power obtained from the external power input unit 101 is converted, by the voltage converter 102, into a voltage for the system load, and supplied to the information processing-related load 103. On the other hand, power from which the system load current is subtracted is charged in the electric storage 106 by the charging control unit 105. The electric storage amount detection unit 109 monitors the electric storage amount of the electric storage 106. If the electric storage 106 is charged to a predetermined value, the charging control unit 105 stops charging of the electric storage 106.

The power charged in the electric storage 106 is supplied to the mechatronics-related load 108 via the voltage converter 107. If the electric storage amount of the electric storage 106 becomes smaller than the predetermined value due to the operation of the mechatronics-related load 108, the charging control unit 105 continuously charges the electric storage 106. With this operation, if the consumption power of the mechatronics-related load 108 is temporarily large, the power stored in the electric storage 106 and the power input from the external power supply 10 are used together, thereby supplying large power.

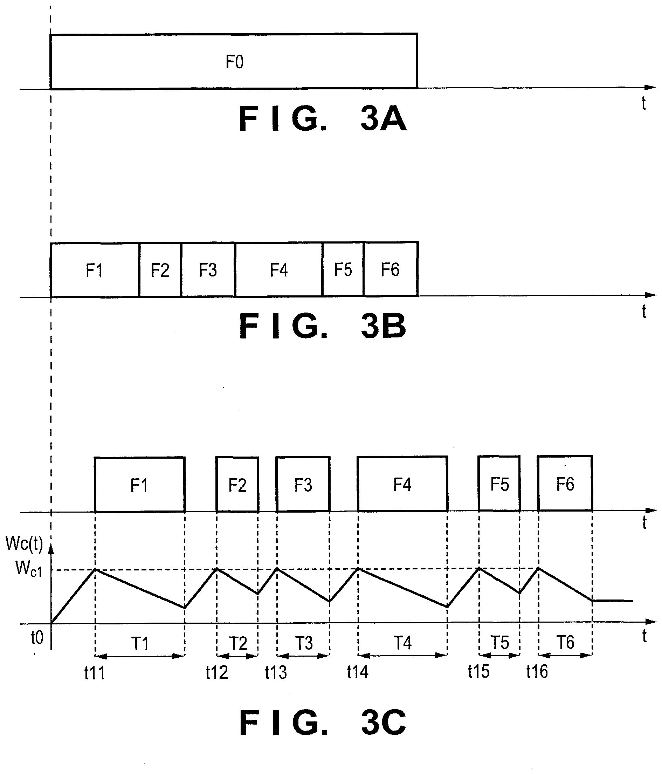

Control for lowering the average consumption power to power suppliable by the external power supply 10 by stopping the mechatronics-related load 108 at an appropriate timing will be described with reference to timing charts shown in Figs. 3A to 3C.

As shown in Fig. 3A, assume that there is a sequence F0 which requires no power supply control since power is sufficiently supplied from the external power supply 10. If the control according to this embodiment is applied to the sequence F0 and it is desirable to execute the same procedure with small power, sequences (F1 to F6) obtained by dividing the sequence F0 as much as possible are prepared, as shown in Fig. 3B. In this case, "as much as possible" indicates, if there is a temporal restriction under which a desired operation result can be obtained, division of the sequence within a range meeting the restriction.

Two examples of sequence division in the printing apparatus will be described below.

[Sequence Division of Print Operation]

The printing apparatus performs printing by scanning the carriage 2 by driving of the carriage motor M1 and conveying the print medium by driving of the conveyance motor M2. The typical driving sequence of the mechatronics-related load 108 includes the steps of:

(1) stopping the carriage;
(2) driving the carriage motor M1 to accelerate the carriage;
(3) discharging ink from the printhead while scanning the carriage at a constant speed;
(4) decelerating the carriage;
(5) driving the conveyance motor M2 to start conveyance of the print medium; and
(6) stopping conveyance of the print medium. By repeating the steps of (1) to (6), an image is formed on the entire print medium.

In the above sequence, if the operation is temporarily stopped at a timing other than the timing at which the carriage stops, the moving speed of the carriage is different before and after the stop of the carriage, and thus print unevenness may occur. Furthermore, while the carriage stops, a capping member (not shown) caps the ink discharge surface of the printhead. However, if the operation is stopped at a timing other than the timing at which the carriage stops, the ink discharge surface is exposed to the air during this period, thereby causing clogging of ink nozzles or the like. To avoid this, it is necessary to execute the steps of (1) to (6) without stopping it. Even after sequence division, the divided sequences need to be processed as a unified sequence, as shown in Fig. 3B. If, therefore, F0 represents a series of sequences for forming an image on the entire print medium, the divided sequence F1 is a sequence including movement of the carriage and conveyance of the print medium for one scan. The divided sequences F2 to F6 are sequences sequentially executed by repeating the same processing as that of the divided sequence F1 five times.

[Sequence Division of Recovery Operation]

If the orifices of the printhead 3 are exposed to the air by the print operation, and then left for a long time, ink may be solidified in the orifices. Even if an attempt to supply energy to the print elements of the printhead 3 and discharge ink is made in this state, the problem that no ink is discharged or the like may actually arise. To prevent this, it may be necessary to perform, before executing the print operation, an operation (recovery operation) of removing ink and the like solidified in the orifices of the printhead 3 and recovering the state to that suitable for ink discharge. To remove the solidified ink, a recovery unit provided in the printing apparatus is operated. A recovery operation by the recovery unit includes preliminary discharge by supplying energy to all the print elements and a wiping operation of the printhead using a printhead wiping mechanism included in the recovery unit.

An example of the sequence of the recovery operation includes the steps of:

(1) performing preliminary discharge by applying, a plurality of times, energy to all the print elements for discharging black (K) ink;
(2) wiping, a plurality of times, the discharge surface on which there are print elements for black (K) ink;
(3) performing preliminary discharge by applying, a plurality of times, energy to all the print elements for discharging color inks of magenta (M), cyan (C), and yellow (Y); and
(4) wiping, a plurality of times, the discharge surface on which there are print elements for color inks of magenta (M), cyan (C), and yellow (Y).

In this sequence, with respect to the steps of (1) and (3), a temporal restriction is imposed on energy application, and thus it is difficult to further divide each of the steps of (1) and (3). To the contrary, with respect to the steps of (2) and (4), even if a standby time of about several sec is inserted between a plurality of wiping operations, removal of solidified ink is hardly influenced, and it is relatively easy to divide each sequence for each wiping operation.

Therefore, if F0 represents the overall sequence of the recovery operation, for example, the sequence can be divided, as follows. That is, the sequence can be divided into the sequence F1 of a plurality of operations of applying energy for black (K) ink, the sequences F2 and F3 of wiping for black (K) ink, the sequence F4 of a plurality of operations of applying energy for color ink, and the sequences F5 and F6 of wiping for color ink.

The sequences F1 to F6 divided as in the above example are executed every time an electric energy $W_c(t)$ of the electric storage 106 detected by the electric storage amount detection unit 109 increases to a constant $W_{c1}$ prepared in advance. This automatically inserts a standby time for charging the electric storage 106 between the sequences, as shown in Fig. 3C. As a result, the average consumption power of the mechatronics-related load 108 lowers, and thus the operation can be performed in the same procedure as that of the sequence F0 even with limited input power.

Note that an electric energy necessary to execute one sequence (for example, a print operation in one scan) is appropriately set as the constant $W_{c1}$. In this embodiment, the sequence is executed under the condition that the electric energy $W_c(t)$ of the electric storage 106 increases to $W_{c1}$. Therefore, it is possible to prevent the operation from stopping due to a shortage of power during one sequence.

In the above example, the sequence of the print operation and the sequence of the recovery operation have been described. These sequences are necessary to print on the print medium. Therefore, these sequences may be collectively referred to as an operation sequence hereinafter.

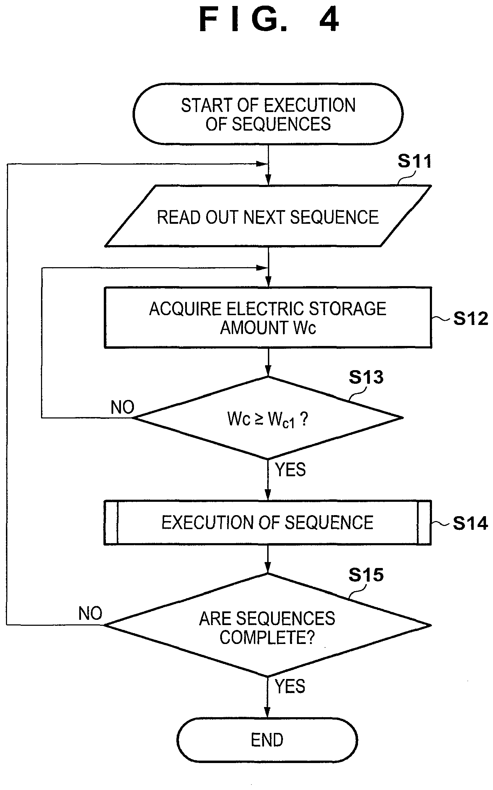

Fig. 4 is a flowchart illustrating the standby time insertion processing by the system control unit 104. Note that in this processing, insertion processing starts at time t0 in Figs. 3A to 3C.

In step S11, the contents of the first sequence F1 to be executed are read out. In step S12, an electric storage amount $W_c$ is acquired from information of the electric storage amount detection unit 109.

For example, an electrical double layer capacitor is used as the electric storage 106, $W_c$ is obtained by:

$$W_c = (1/2)C(V^2 - V_0^2) \qquad \ldots(1)$$

where C represents the capacity of the electrical double layer capacitor, V represents the terminal voltage of the electrical double layer capacitor, and $V_0$ represents a lowest voltage to maintain a conversion operation by the voltage converter 107.

In step S13, $W_c$ is compared with the predetermined threshold $W_{c1}$. The process waits until the electric storage amount $W_c$ increases to satisfy $W_c \geq W_{c1}$. Note that $W_{c1}$ is set so as to execute, with smallest input power assumed in consideration of the wiring resistance value of the external power supply 10 and the like, a sequence which imposes a heaviest load (the electric energy is high and the execution time is short) assumed in the printing apparatus 1. For example, when Pi(min) represents the smallest input power, Wf(max) represents the consumption power of the sequence whose consumption power is largest, and T represents the time taken to execute the sequence, Wc1 is set to satisfy

$$\text{Pi(min)} \times T + W_{c1} > \text{Wf(max)} \qquad \ldots(2)$$

If the sequence indicates the print operation of one scan, the following electric energy is set as Wf(max). More specifically, the consumption power when the carriage reciprocates within the movable range of the carriage and the printhead 3 performs printing on a print sheet of the maximum size supported by the inkjet printing apparatus according to this embodiment using all the colors at the highest resolution is set.

After confirming that $W_c \geq W_{c1}$ is satisfied, the process advances to step S14 to execute the sequence F1.

This processing corresponds to time $t0 \leq t < t11$ in Figs. 3A to 3C, and execution of the sequence F1 starts at time t = t11. After the end of execution of the sequence F1, completion confirmation processing is performed in step S15, and the process returns to step S11. Then, processing for the next sequence F2 starts at time t=t12. The same processing is executed until execution of the sequence F6 is completed. According to Fig. 3C, it takes T1 to complete the sequence F1 from time at t=t11, and it takes T2 to complete the sequence F2 from the time at t=t12. Likewise, it takes T3, T4, T5 and T6 to complete the sequences F3, F4, F5 and F6 from time at t=t13, t14, t15 and t16, respectively.

When charged to a predetermined voltage, the capacity of the electric storage 106 is set to a value to ensure the electric energy $W_{c1}$ even if the capacity decreases due to a deterioration or the like.

In this embodiment, the power of the information processing-related load 103 is acquired from the input side of the charging control unit 105. This arrangement assumes that the information processing-related load 103 can sufficiently operate with power obtained from the external power supply 10 and no power support by the electric storage 106 is necessary. Thus, no current consumed by the information processing-related load 103 flows into the charging control unit 105 and the electric storage 106, and the current supply capability can be advantageously reduced. If the information processing-related load 103 needs support by the electric storage 106, the input of the voltage converter 102 may be connected to the output of the electric storage 106 (a dotted line in Fig. 2). In this case as well, standby time insertion processing can be implemented in the same manner by the flowchart shown in Fig. 4.

Therefore, according to the above-described embodiment, even if an electric storage of a small capacity is used, it is possible to perform printing by efficiently using the electric storage by sufficiently charging the electric storage every time a sequence is executed. Thus, even if the capacity of the electric storage is small, it is possible to perform printing by efficiently using the power. This contributes to cost reduction, downsizing, weight reduction, and the like of the printing apparatus.

[Second Embodiment]

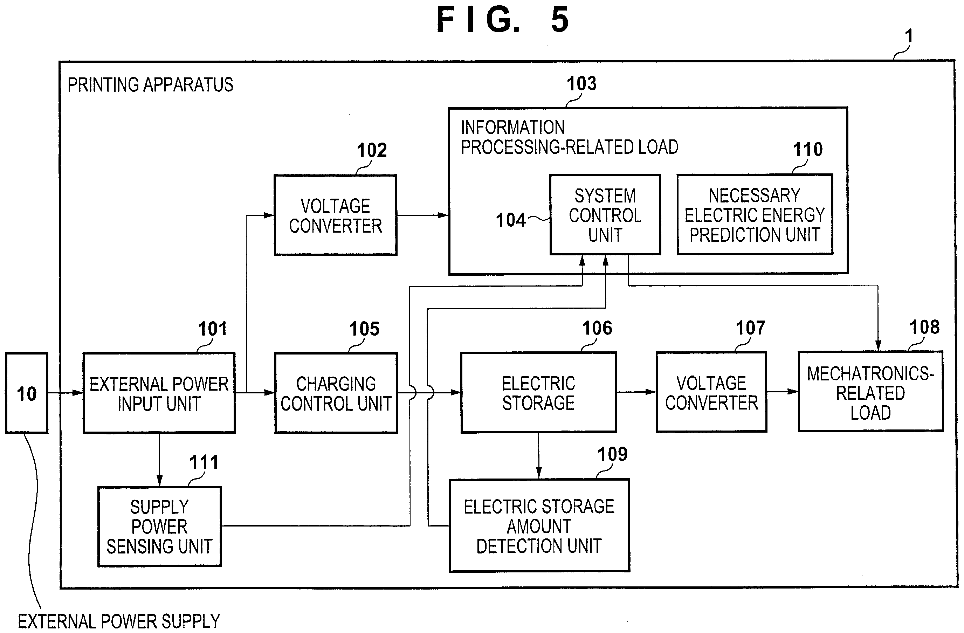

Fig. 5 is a block diagram schematically showing a power supply and drive arrangement according to the second embodiment of the present invention. Note that in Fig. 5, the same reference numerals as those in Fig. 2 denote the same components and a description thereof will be omitted.

A supply power sensing unit 111 senses/measures power suppliable from an external power input unit 101. Suppliable power is desirably, automatically sensed at a time of connection to an external power supply 10. If, for example, the shape of the external power input unit 101 corresponds to USB, it is possible to discriminate between respective standards using a USB communication line. Alternatively, discrimination may be performed using communication individually determined with the external power supply 10 or the like by utilizing a connector dedicated to the external power input unit 101.

With the supply power sensing unit 111 having the above arrangement, it is possible to appropriately set charging power by the charging control unit 105 with respect to different suppliable powers defined by a plurality of standards. In addition, the output capabilities of many of assumed external power supplies 10 are each defined by not power but a current in many cases. Thus, it is desirable to measure a voltage in addition to logical discrimination of suppliable power. This can grasp the actual suppliable power in consideration of a voltage drop caused by a resistance component such as a connector or cable which connects the external power supply 10 and the external power input unit 101, thereby forming an arrangement tolerable of a variation in resistance component. The supply power sensing unit 111 is connected to a system control unit 104, similarly to an electric storage amount detection unit 109, and uses the sensed power as information for executing standby time insertion processing according to this embodiment.

A necessary electric energy prediction unit 110 predicts an electric energy required at the time of execution of each divided sequence. In the first embodiment, the value of the electric energy depending on the sequence which imposes the heaviest load is used as a fixed amount. In this embodiment, however, the value of the electric energy predicted by the necessary electric energy prediction unit 110 is used to execute control by the system control unit 104.

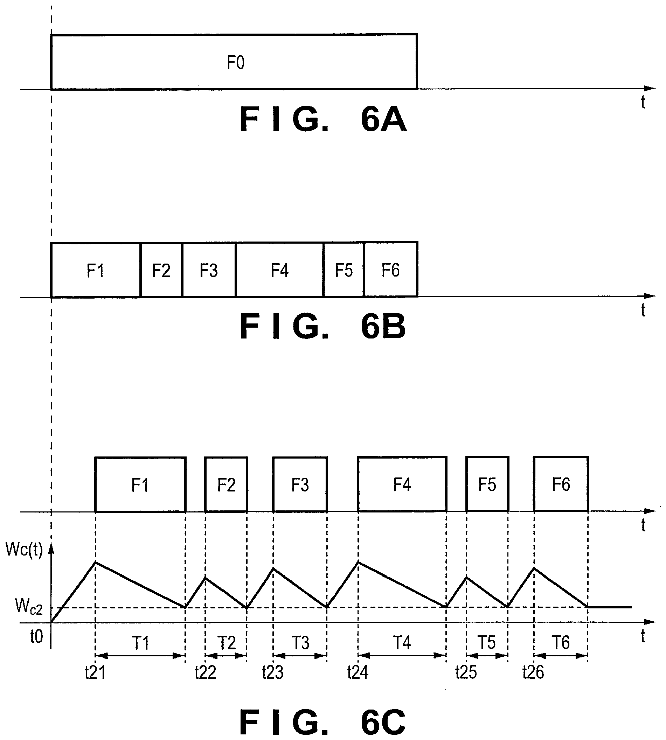

A method of lowering the average consumption power to power suppliable by the external power supply 10 in a printing apparatus according to this embodiment will be described with reference to Figs. 6A to 6C.

In this embodiment, during the standby state before executing the next sequence, only an electric energy required by the next sequence is charged. A lowest electric energy $W_{c2}$ as a charging criterion is a threshold determined based on a lowest input voltage to maintain the conversion operation of a voltage converter 107 using the power of an electric storage 106. In this embodiment, as shown in Fig. 6C, an electric storage amount to be charged before execution of the next sequence is calculated so an electric storage amount $W_c(t)$ does not become smaller than $W_{c2}$ during execution of each sequence. In this embodiment, as shown in Fig. 6C, this calculation processing is performed every time a sequence is executed, and each sequence is executed after standing by until power is charged to the calculated value. More specifically, before execution of the next sequence, an electric energy to be consumed until execution of the next sequence ends and an electric energy to be supplied during execution of the sequence are predicted. Based on the predicted electric energies, power is charged until it is determined that the electric energy $W_{c2}$ is ensured at the end of the next sequence. Details will be described later. Note that the capacity of the electric storage 106 is set so as to charge an electric energy higher than $W_{c1}$ indicated by expression (2) in this embodiment as well. Note that since Figs. 6A and 6B are identical to Fig. 3A and 3B, respectively, the description will be omitted. T1, T2, T3, T4, T5 and T6 in Fig. 6C are the same as those shown in Fig. 3C. Times t21, t22, t23 t24, t25 and t26 in Fig. 6C mean the start times of the sequences F1-F6, respectively.

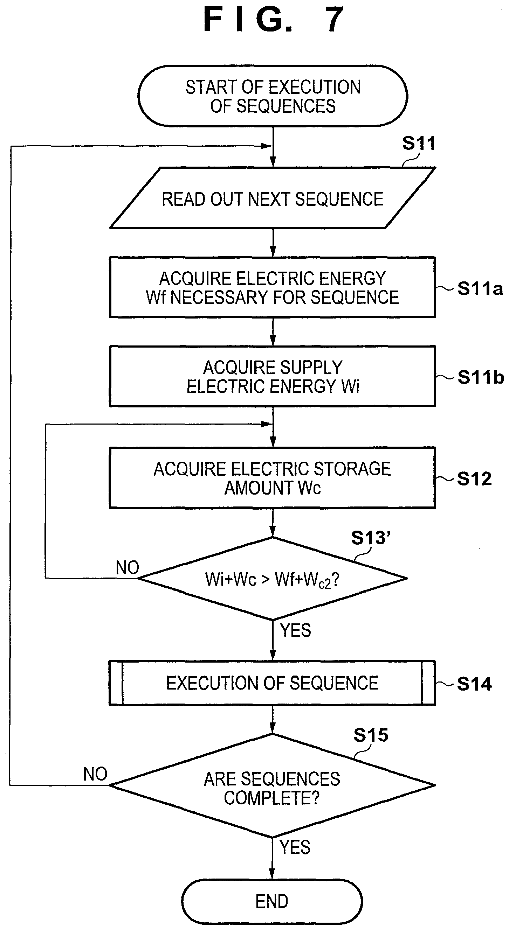

Fig. 7 is a flowchart illustrating standby time insertion processing by the system control unit 104. Note that in Fig. 7, the same step numbers as those in Fig. 4 denote the same steps and a description thereof will be omitted. This embodiment is different from the above-described first embodiment in that a value to be compared with for processing in step S13' is changed, and steps S11a and S11b are added to acquire comparison contents.

In step S11a, the necessary electric energy prediction unit 110 acquires an electric energy Wf necessary for a sequence F1. A result of calculation under an operation condition given to the sequence F1 or the like may be used as the value of Wf, or a numerical value based on actual measurement may be used as the value of Wf.

The printing apparatus obtains the electric energy Wf by the sum of an electric energy required by ink discharge, an electric energy of a carriage motor M1 to scan a carriage 2, and the like. The electric energy required by ink discharge is obtained by the product of the number of ink dots discharged by a printhead 3 while the carriage performs one reciprocal operation in directions indicated by an arrow A by a scan of the carriage 2 and an electric energy necessary to discharge one dot. Note that the number of discharge dots is calculated from print data.

On the other hand, the electric energy of the carriage motor M1 is not uniquely determined, unlike the electric energy required by ink discharge from the printhead 3. The printing apparatus according to this embodiment uses a DC motor with brushes as the carriage motor M1 while controlling the rotation speed by a servo mechanism. Thus, if the printing speed is set high, the rotation speed of the carriage motor M1 is set high, and the servo mechanism gives the carriage motor M1 high energy corresponding to the rotation speed.

As a result, the electric energy necessary for the carriage motor M1 changes depending on the rotation speed of the carriage motor M1. The servo mechanism operates to reduce the influence of a variation in load caused by friction or the like when scanning the carriage 2, which also changes energy to be given to the carriage motor M1. In this status, it is difficult to correctly predict in advance the necessary electric energy before driving the carriage motor M1.

Therefore, in this embodiment, as an electric energy for scanning the carriage 2, an empirical value based on actual measurement is stored in advance in the memory of the system control unit 104, and an information processing-related load 103 uses the stored electric energy.

According to the above-described procedure, the system control unit 104 can obtain the value of Wf by calculating the sum of the electric energy by ink discharge, which has been obtained by calculation, and the electric energy, based on actual measurement, for operating the carriage 2.

Next, in step S11b, a suppliable electric energy Wi to be supplied during execution of the sequence is obtained based on information of supply power by the external power supply 10, which has been obtained from the supply power sensing unit 111, and a time T1 necessary to execute the next sequence F1. For example, if the USB port of the PC is assumed as the external power supply 10, and a voltage drop caused by the USB connector or cable remains unchanged depending on time t, Wi is obtained by:

$$\text{Wi} = \text{Vi} \times \text{Ii} \times \text{T1} \qquad \qquad ...(3)$$

where Vi represents a terminal voltage measured by the supply power sensing unit 111, and Ii represents a maximum supply current value defined by the USB standard.

Subsequently, in step S13', an electric energy $(Wi + W_c)$ obtained during execution of the sequence is compared with the electric energy Wf required by the sequence to be executed. If $Wi + W_c \leq Wf + W_{c2}$, the process returns to step S12. Then, the process waits until the electric storage amount $W_c$ increases to satisfy $Wi + W_c > Wf + W_{c2}$. When it can be confirmed that $Wi + W_c > Wf + W_{c2}$ is satisfied, the process advances to step S14 to execute the sequence F1.

That is, in step S13', based on the electric energy necessary for the next sequence and the electric energy to be supplied during the next sequence, the system control unit 104 determines whether the charge amount $W_{c2}$ is ensured after execution of the next sequence. If it is determined that the charge amount $W_{c2}$ is ensured after execution of the next sequence (it is determined that a sufficient charge amount has been charged), the next sequence starts.

Therefore, in the above-described embodiment, if at least an electric energy for a sequence to be executed next is ensured along with the progress of the operation sequence, the sequence is rapidly executed, thereby making it possible to execute each sequence quickly as much as possible. This embodiment is effective especially when an electric energy chargeable in the electric storage is significantly high, as compared with the use electric energy of each sequence.

Note that in the above-described embodiments, the printing apparatus having the single function has been exemplified. The present invention, however, is not limited to this. For example, a multi-function printer (copying machine) including an image reading device (scanner device) in the above-described printing apparatus, or a multi-function peripheral implemented by adding a facsimile function to the copying machine may be used.

**Claims**

1. A printing apparatus (1) for printing an image on a print medium (P), comprising:

> an electric storage (106) configured to be charged by power input from an external power supply (10); **characterised by**
> a print unit configured to sequentially execute, by discharging the power charged in the electric storage, a plurality of sequences in an operation sequence for printing on the print medium;
> a charge unit (105) configured to charge power in the electric storage from when execution of one sequence among the plurality of sequences by the print unit ends until a next sequence starts; and
> a control means (104) configured to control the print unit to execute the next sequence in a case where an electric storage amount of the electric storage becomes larger than a predetermined threshold by charging of the electric storage by the charge unit, wherein the predetermined threshold is determined so as to prevent the execution of the next sequence by the print unit from stopping during the next sequence due to a shortage of the power discharged by the print unit from the electric storage.

2. The apparatus according to claim 1, wherein

the print unit includes:

a printhead (3) with a plurality of print elements; and
a carriage (2), incorporating the printhead, configured to move in a predetermined direction, and

the print unit prints on the print medium by the printhead while scanning the carriage.

3. The apparatus according to claim 2, wherein

the operation sequence is a sequence of a print operation of printing on the print medium, and
each of the plurality of sequences includes one scan of the carriage, and printing by the plurality of print elements included in the printhead, which is executed by the one scan.

4. The apparatus according to any one of claims 1 to 3, further comprising a conveyance unit (M2, 5) configured to convey the print medium on which the print unit prints,

wherein each of the plurality of sequences includes conveyance of the print medium by the conveyance unit.

5. The apparatus according to claim 2, wherein the printhead comprises an inkjet printhead configured to perform printing by discharging ink.

6. The apparatus according to claim 5, further comprising a recovery unit configured to recover the inkjet printhead,

wherein the operation sequence is a sequence of a recovery operation of the inkjet printhead by the recovery unit, the sequence of the recovery operation includes a preliminary discharge operation from the inkjet printhead and a plurality of wiping operations on an ink discharge surface of the inkjet printhead, and
the plurality of sequences include the preliminary discharge operation and the respective wiping operations.

7. The apparatus according to any one of claims 1 to 6, wherein the predetermined threshold is determined to exceed consumption power of a sequence, whose consumption power is largest, among the plurality of sequences.

8. The apparatus according to claim 2, further comprising a prediction means (110) configured to predict an electric energy necessary to execute the next sequence,

wherein the control means uses, as the predetermined threshold, a threshold based on the electric energy necessary to execute the next sequence, which has been predicted by the prediction means.

9. The apparatus according to claim 8, wherein based on print data used for printing of one scan by the carriage, the prediction means predicts the electric energy necessary to execute the next sequence.

10. The apparatus according to claim 8, wherein

the prediction means acquires an electric energy to be supplied during execution of the next sequence, and
the control means uses, as the predetermined threshold, a threshold based on the electric energy to be supplied during execution of the next sequence and the electric energy necessary to execute the next sequence.

11. The apparatus according to any one of claims 1 to 10, wherein the electric storage comprises an electrical double layer capacitor.

12. The apparatus according to claim 8, wherein based on the electric energy necessary to execute the next sequence, which has been predicted by the prediction means, the charge unit charges power in the electric storage so that the charge amount of the electric storage after execution of the next sequence is not smaller than a predetermined charge amount smaller than a charge amount of the predetermined threshold.

13. A control method for a printing apparatus (1) for printing an image on a print medium (P) using power of an electric storage (106) charged by power input from an external power supply (10), comprising:

sequentially executing, by discharging the power charged in the electric storage, a plurality of sequences in an operation sequence for printing on the print medium;
charging power in the electric storage from when execution of one sequence among the plurality of sequences ends until a next sequence starts; and
controlling to execute the next sequence in a case where an electric storage amount of the electric storage becomes larger than a predetermined threshold by charging of the electric storage, wherein the predetermined threshold is determined so as to prevent the execution of the next sequence from stopping during the next sequence due to a shortage of the power discharged from the electric storage.

14. The method according to claim 13, wherein the printing apparatus includes a printhead (3) with a plurality of print elements, and a carriage (2), incorporating the printhead, configured to move in a predetermined direction, and the printing apparatus prints on the print medium by the printhead while scanning the carriage.

15. The method according to claim 14, wherein the operation sequence is a sequence of a print operation of printing on the print medium, and each of the plurality of sequences includes one scan of the carriage, and printing by the plurality of print elements included in the printhead, which is executed by the one scan.

## Patentansprüche

1. Druckvorrichtung (1) zum Drucken eines Bilds auf ein Druckmedium (P), umfassend:

einen elektrischen Speicher (106), der konfiguriert ist, durch von einer externen Leistungszufuhr (10) eingegebene Leistung aufgeladen zu werden; **gekennzeichnet durch**
eine Druckeinheit, die konfiguriert ist, sequentiell mehrere Sequenzen in einer Verarbeitungssequenz zum Drucken auf dem Druckmedium durch Entladen der im elektrischen Speicher gespeicherten Leistung auszuführen;
eine Ladeeinheit (105), die konfiguriert ist, den elektrischen Speicher mit Leistung aufzuladen ab Ende des Ausführens einer Sequenz der mehreren Sequenzen durch die Druckeinheit bis zum Beginn einer nächsten Sequenz; und
eine Steuereinrichtung (104), die konfiguriert ist, die Druckeinheit zu steuern, die nächste Sequenz auszuführen, falls eine elektrische Speichermenge des elektrischen Speichers größer als eine vorbestimmte Schwelle wird, indem der elektrische Speicher durch die Ladeeinheit aufgeladen wird, wobei die vorbestimmte Schwelle so bestimmt ist, dass Anhalten des Ausführens der nächsten Sequenz durch die Druckeinheit während der nächsten Sequenz wegen eines Mangels bezüglich der Leistung, die durch die Druckeinheit aus dem elektrischen Speicher entladen wird, verhindert wird.

2. Vorrichtung nach Anspruch 1, wobei

die Druckeinheit umfasst:

einen Druckkopf (3) mit mehreren Druckelementen, und
einen Schlitten (2), in dem der Druckkopf enthalten ist und der konfiguriert ist, sich in eine vorbestimmte Richtung zu bewegen; und

wobei die Druckeinheit bei gleichzeitiger Abtastbewegung des Schlittens durch den Druckkopf auf das Druckmedium druckt.

3. Vorrichtung nach Anspruch 2, wobei

die Verarbeitungssequenz eine Sequenz einer Druckverarbeitung des Druckens auf das Druckmedium ist, und jede der mehreren Sequenzen umfasst: eine Abtastbewegung des Schlittens und bei der einen Abtastbewegung ausgeführtes Drucken durch die mehreren im Druckkopf enthaltenen Druckelemente.

4. Vorrichtung nach einem der Ansprüche 1 bis 3, ferner umfassend eine Transporteinheit (M2, 5), die konfiguriert ist, das Druckmedium zu transportieren, auf das die Druckeinheit druckt,

wobei jede der mehreren Sequenzen Transportieren des Druckmediums durch die Transporteinheit umfasst.

5. Vorrichtung nach Anspruch 2, wobei der Druckkopf einen Tintenstrahldruckkopf umfasst, der konfiguriert ist, Drucken durchzuführen, indem Tinte ausgestoßen wird.

6. Vorrichtung nach Anspruch 5, ferner umfassend eine Wiederherstellungseinheit zum Durchführen einer Wiederherstellung bezüglich des Tintenstrahldruckkopfs, wobei

die Verarbeitungssequenz eine Sequenz einer Wiederherstellungsverarbeitung des Tintenstrahldruckkopfs durch die Wiederherstellungseinheit ist,
die Sequenz der Wiederherstellungsverarbeitung eine Vorabausstoßverarbeitung aus dem Tintenstrahldruckkopf und mehrere Wischverarbeitungen auf einer Tintenausstoßfläche des Tintenstrahldruckkopfs umfasst, und
die mehreren Sequenzen die Vorabausstoßverarbeitung und die jeweilige Wischverarbeitung umfassen.

7. Vorrichtung nach einem der Ansprüche 1 bis 6, wobei die vorbestimmte Schwelle so bestimmt ist, dass sie die Leistungsaufnahme einer Sequenz aus den mehreren Sequenzen überschreitet, deren Leistungsaufnahme am höchsten ist.

8. Vorrichtung nach Anspruch 2, ferner umfassend eine Prognoseeinrichtung (110), die konfiguriert ist, eine zum Ausführen der nächsten Sequenz nötige elektrische Energie zu prognostizieren,

wobei die Steuereinrichtung als die vorbestimmte Schwelle eine Schwelle verwendet, die auf der zum Ausführen der nächsten Sequenz nötigen elektrischen Energie basiert, welche durch die Prognoseeinrichtung prognostiziert wurde.

9. Vorrichtung nach Anspruch 8, wobei die Prognoseeinrichtung die zum Ausführen der nächsten Sequenz nötige elektrische Energie basierend auf Druckdaten prognostiziert, die zum Drucken bei einer Abtastbewegung durch den Schlitten verwendet werden.

10. Vorrichtung nach Anspruch 8, wobei

die Prognoseeinrichtung eine während dem Ausführen der nächsten Sequenz bereitzustellende elektrische Energie erfasst, und
die Steuereinrichtung als die vorbestimmte Schwelle eine Schwelle verwendet, die auf der während Ausführen der nächsten Sequenz bereitzustellenden elektrischen Energie und der zum Ausführen der nächsten Sequenz nötigen elektrischen Energie basiert.

11. Vorrichtung nach einem der Ansprüche 1 bis 10, wobei der elektrische Speicher einen elektrischen Doppelschichtkondensator umfasst.

12. Vorrichtung nach Anspruch 8, wobei die Ladeeinheit basierend auf der zum Ausführen der nächsten Sequenz nötigen elektrischen Energie, die durch die Prognoseeinrichtung prognostiziert wurde, den elektrischen Speicher mit Leistung auflädt, sodass die Ladungsmenge des elektrischen Speichers nach Ausführen der nächsten Sequenz nicht kleiner ist als eine vorbestimmte Ladungsmenge, die kleiner ist als eine Ladungsmenge der vorbestimmten Schwelle.

13. Steuerverfahren für eine Druckvorrichtung (1) zum Drucken eines Bilds auf ein Druckmedium (P) unter Verwendung von Leistung eines elektrischen Speichers (106), der durch von einer externen Leistungszufuhr (10) eingegebene Leistung aufgeladen wird, umfassend:

sequentielles Ausführen mehrerer Sequenzen in einer Verarbeitungssequenz zum Drucken auf dem Druckmedium durch Entladen der im elektrischen Speicher gespeicherten Leistung;
Aufladen des elektrischen Speichers mit Leistung ab Ende der Ausführung einer Sequenz der mehreren Sequenzen bis zum Start einer nächsten Sequenz; und

Steuern des Ausführens der nächsten Sequenz, falls eine elektrische Speichermenge des elektrischen Speichers größer als eine vorbestimmte Schwelle wird, indem der elektrische Speicher aufgeladen wird, wobei die vorbestimmte Schwelle so bestimmt wird, dass Anhalten des Ausführens der nächsten Sequenz durch die Druckeinheit während der nächsten Sequenz wegen eines Mangels bezüglich der Leistung, die durch die Druckeinheit aus dem elektrischen Speicher entladen wird, verhindert wird.

14. Verfahren nach Anspruch 13, wobei die Druckvorrichtung umfasst:

einen Druckkopf (3) mit mehreren Druckelementen; und

einen Schlitten (2), in dem der Druckkopf enthalten ist und der konfiguriert ist, sich in eine vorbestimmte Richtung zu bewegen; und

wobei die Druckvorrichtung bei gleichzeitiger Abtastbewegung des Schlittens durch den Druckkopf auf das Druckmedium druckt.

15. Verfahren nach Anspruch 14, wobei die Verarbeitungssequenz eine Sequenz einer Druckverarbeitung des Druckens auf das Druckmedium ist, und jede der mehreren Sequenzen umfasst: eine Abtastbewegung des Schlittens und bei der einen Abtastbewegung ausgeführtes Drucken durch die mehreren im Druckkopf enthaltenen Druckelemente.

## Revendications

1. Appareil d'impression (1) destiné à imprimer une image sur un support d'impression (P), comprenant :

une unité de stockage électrique (106) configurée pour être chargée en énergie fournie en entrée par une alimentation électrique externe (10) ;

**caractérisé par**

une unité d'impression configurée pour exécuter séquentiellement, en déchargeant l'énergie chargée dans l'unité de stockage électrique, une pluralité de séquences dans une séquence d'opérations destinées à effectuer une impression sur le support d'impression ;

une unité de charge (105) configurée pour charger en énergie l'unité de stockage électrique entre le moment où l'exécution d'une séquence, parmi la pluralité de séquences, par l'unité d'impression se termine et le début d'une séquence suivante ; et

un moyen de commande (104) configuré pour commander l'unité d'impression afin qu'elle exécute la séquence suivante dans un cas où une quantité d'énergie électrique stockée dans l'unité de stockage électrique devient supérieure à un seuil prédéterminé du fait de la charge de l'unité de stockage électrique par l'unité de charge, dans lequel le seuil prédéterminé est déterminé de façon à empêcher l'interruption de l'exécution de la séquence suivante pendant la séquence suivante du fait de l'insuffisance de la puissance prélevée par l'unité d'impression sur l'unité de stockage électrique.

2. Appareil selon la revendication 1, dans lequel l'unité d'impression comprend :

une tête d'impression (3) munie d'une pluralité d'éléments d'impression ; et

un chariot (2), intégrant la tête d'impression, configuré pour se déplacer dans une direction prédéterminée, et l'unité d'impression effectue une impression sur le support d'impression au moyen de la tête d'impression tout en animant le chariot d'un mouvement de balayage.

3. Appareil selon la revendication 2, dans lequel

la séquence d'opérations est une séquence comprenant une opération d'impression qui consiste à effectuer une impression sur le support d'impression, et

chacune de la pluralité de séquences comprend un mouvement de balayage du chariot, et une impression effectuée par la pluralité d'éléments d'impression contenus dans la tête d'impression, qui est exécutée par ledit mouvement de balayage.

4. Appareil selon l'une quelconque des revendications 1 à 3, comprenant en outre une unité de transport (M2, 5) configurée pour transporter le support d'impression sur lequel l'unité d'impression effectue une impression, dans lequel chacune de la pluralité de séquences comprend le transport du support d'impression par l'unité de transport.

**5.** Appareil selon la revendication 2, dans lequel la tête d'impression comprend une tête d'impression à jet d'encre configurée pour effectuer une impression par expulsion d'encre.

**6.** Appareil selon la revendication 5, comprenant en outre une unité de régénération configurée pour régénérer la tête d'impression à jet d'encre,
dans lequel la séquence d'opérations est une séquence comprenant une opération de régénération de la tête d'impression à jet d'encre par l'unité de régénération,
la séquence de l'opération de régénération comprend une opération d'expulsion préliminaire par la tête d'impression à jet d'encre et une pluralité d'opérations d'essuyage sur une surface d'expulsion d'encre de la tête d'impression à jet d'encre, et
la pluralité de séquences comprend l'opération d'expulsion préliminaire et les opérations d'essuyage respectives.

**7.** Appareil selon l'une quelconque des revendications 1 à 6, dans lequel le seuil prédéterminé est déterminé de façon qu'il soit supérieur à la puissance consommée d'une séquence, dont la puissance consommée est la plus grande parmi la pluralité de séquences.

**8.** Appareil selon la revendication 2, comprenant en outre un moyen de prédiction (110) configuré pour prédire une énergie électrique nécessaire pour exécuter la séquence suivante,
dans lequel le moyen de commande utilise, en tant que seuil prédéterminé, un seuil basé sur l'énergie électrique nécessaire pour exécuter la séquence suivante, qui a été prédite par le moyen de prédiction.

**9.** Appareil selon la revendication 8, dans lequel, sur la base des données d'impression utilisées pour l'impression correspondant à un balayage effectué par le chariot, le moyen de prédiction prédit l'énergie électrique nécessaire pour exécuter la séquence suivante.

**10.** Appareil selon la revendication 8, dans lequel
le moyen de prédiction acquiert une énergie électrique devant être délivrée pendant l'exécution de la séquence suivante, et
le moyen de commande utilise, en tant que seuil prédéterminé, un seuil basé sur l'énergie électrique devant être délivrée pendant l'exécution de la séquence suivante et sur l'énergie électrique nécessaire pour exécuter la séquence suivante.

**11.** Appareil selon l'une quelconque des revendications 1 à 10, dans lequel l'unité de stockage électrique comprend un condensateur électrique à double couche.

**12.** Appareil selon la revendication 8, dans lequel, sur la base de l'énergie électrique nécessaire pour exécuter la séquence suivante, qui a été prédite par le moyen de prédiction, l'unité de charge effectue la charge en énergie de l'unité de stockage électrique de façon que le niveau de charge en énergie de l'unité de stockage électrique après exécution de la séquence suivante ne soit pas inférieur à un niveau de charge prédéterminé, qui est inférieur à un niveau de charge du seuil prédéterminé.

**13.** Procédé de commande pour un appareil d'impression (1) destiné à imprimer une image sur un support d'impression (P) en utilisant l'énergie d'une unité de stockage électrique (106) chargée en énergie fournie en entrée par une alimentation électrique externe (10), consistant à :

exécuter séquentiellement, en déchargeant l'énergie chargée dans l'unité de stockage électrique, une pluralité de séquences dans une séquence d'opérations destinées à effectuer une impression sur le support d'impression ; charger en énergie l'unité de stockage électrique entre le moment où l'exécution d'une séquence parmi la pluralité de séquences se termine et le début d'une séquence suivante ; et
commander l'exécution de la séquence suivante dans un cas où une quantité d'énergie électrique stockée dans l'unité de stockage électrique devient supérieure à un seuil prédéterminé du fait de la charge de l'unité de stockage électrique, dans lequel le seuil prédéterminé est déterminé de façon à empêcher l'interruption de l'exécution de la séquence suivante pendant la séquence suivante du fait de l'insuffisance de la puissance prélevée sur l'unité de stockage électrique.

**14.** Procédé selon la revendication 13, dans lequel l'appareil d'impression comporte une tête d'impression (3) munie d'une pluralité d'éléments d'impression, et un chariot (2), intégrant la tête d'impression, configuré pour se déplacer dans une direction prédéterminée, et l'appareil d'impression effectue une impression sur le support d'impression au moyen de la tête d'impression tout en animant le chariot d'un mouvement de balayage.

15. Procédé selon la revendication 14, dans lequel la séquence d'opérations est une séquence comprenant une opération d'impression qui consiste à effectuer une impression sur le support d'impression, et chacune de la pluralité de séquences comprend un mouvement de balayage du chariot, et une impression effectuée par la pluralité d'éléments d'impression contenus dans la tête d'impression, qui est exécutée par ledit mouvement de balayage.

# FIG. 1

1

P

6

7

5

M2

M1

A

3

2

EP 3 251 866 B1

# FIG. 2

PRINTING APPARATUS — 1

102 VOLTAGE CONVERTER

103 INFORMATION PROCESSING-RELATED LOAD
104 SYSTEM CONTROL UNIT

107 VOLTAGE CONVERTER

108 MECHATRONICS-RELATED LOAD

106 ELECTRIC STORAGE

105 CHARGING CONTROL UNIT

109 ELECTRIC STORAGE AMOUNT DETECTION UNIT

101 EXTERNAL POWER INPUT UNIT

10

EXTERNAL POWER SUPPLY

F0

## F I G. 3A

F1 | F2 | F3 | F4 | F5 | F6

## F I G. 3B

F1 | F2 | F3 | F4 | F5 | F6

$Wc(t)$

$W_{c1}$

$t0$

T1 | T2 | T3 | T4 | T5 | T6

$t11$ | $t12$ | $t13$ | $t14$ | $t15$ | $t16$

## F I G. 3C

# F I G. 4

START OF EXECUTION
OF SEQUENCES

**S11**

READ OUT NEXT SEQUENCE

ACQUIRE ELECTRIC STORAGE
AMOUNT Wc — **S12**

**S13**

NO $Wc \geq W_{c1}$ ?

YES

EXECUTION OF SEQUENCE — **S14**

**S15**

NO ARE SEQUENCES
COMPLETE?

YES

END

# F I G. 5

EP 3 251 866 B1

F0

# F I G. 6A

F1  F2  F3  F4  F5  F6

t

# F I G. 6B

F1  F2  F3  F4  F5  F6

t

$W_c(t)$

$W_{c2}$

t0

T1  T2  T3  T4  T5  T6

t21  t22  t23  t24  t25  t26

# F I G. 6C

# F I G. 7

```
        ╭─────────────────────────╮
        │   START OF EXECUTION     │
        │      OF SEQUENCES        │
        ╰─────────────────────────╯
                    │
                    ▼                    S11
        ╱─────────────────────────╱
       ╱   READ OUT NEXT SEQUENCE ╱
      ╱─────────────────────────╱
                    │
                    ▼
        ┌─────────────────────────┐
        │  ACQUIRE ELECTRIC ENERGY │    S11a
        │  Wf NECESSARY FOR SEQUENCE│
        └─────────────────────────┘
                    │
                    ▼
        ┌─────────────────────────┐
        │     ACQUIRE SUPPLY       │    S11b
        │   ELECTRIC ENERGY Wi     │
        └─────────────────────────┘
                    │
                    ▼
        ┌─────────────────────────┐
        │  ACQUIRE ELECTRIC STORAGE│    S12
        │        AMOUNT Wc         │
        └─────────────────────────┘
                    │
                    ▼                    S13'
    NO      ◇  Wi+Wc > Wf+Wc2?  ◇
                    │ YES
                    ▼
        ┌─────────────────────────┐
        │  EXECUTION OF SEQUENCE   │    S14
        └─────────────────────────┘
                    │
                    ▼                    S15
    NO      ◇  ARE SEQUENCES     ◇
            ◇    COMPLETE?       ◇
                    │ YES
                    ▼
        ╭─────────────────────────╮
        │          END            │
        ╰─────────────────────────╯
```

**EP 3 251 866 B1**

## REFERENCES CITED IN THE DESCRIPTION

### Patent documents cited in the description

- JP 2010259279 A
- JP 2007248729 A